Europäisches Patentamt

European Patent Office

Office européen des brevets

(11) Numéro de publication: **0 298 834**
**A1**

# DEMANDE DE BREVET EUROPEEN

(21) Numéro de dépôt: **88401665.0**

(22) Date de dépôt: **29.06.88**

(51) Int. Cl.⁴: **B 65 G 25/10**
**A 01 G 9/08**

(30) Priorité: **29.06.87 FR 8709152**

(43) Date de publication de la demande:
**11.01.89 Bulletin 89/02**

(84) Etats contractants désignés: **BE ES FR IT NL**

(71) Demandeur: **GERPLANT AUTOMATION**
**Tourville-la-Rivière**
**F-76410 Cleon (FR)**

(72) Inventeur: **Germaine, Michel**
**3 Sentier des Bûcherons**
**F-76350 Oissel (FR)**

(74) Mandataire: **Casalonga, Axel et al**
**BUREAU D.A. CASALONGA - JOSSE Morassistrasse 8**
**D-8000 Munich 5 (DE)**

(54) **Dispositif d'avance pas-à-pas, notamment pour déplacer une succession d'objets suivant une direction d'avancement sur un chemin de transport.**

(57) Dispositif d'avance pas-à-pas, comprenant, sur un chemin de guidage (9) parallèle au chemin de transport (2) des objets (3) à avancer, un chariot (10) agissant par poussée sur l'arrière du dernier des objets (3). Le chariot (10) porte une crémaillère dont les dents (22, 23) coopèrent avec un cliquet (39) animé d'un mouvement de va-et-vient par un vérin (27). Une semelle (32) soulève le cliquet (39) pendant une partie du mouvement de va-et-vient pour qu'il coopère, lorsqu'il est soulevé, uniquement avec la première dent (22) plus haute que les autres dents (23) de la crémaillère.

Application : par exemple à l'avancement de plaques à alvéoles utilisées pour le semis et repiquage en culture horticole et maraîchère.

FIG.1

**Description**

## DISPOSITIF D'AVANCE PAS-A-PAS, NOTAMMENT POUR DEPLACER UNE SUCCESSION D'OBJETS SUIVANT UNE DIRECTION D'AVANCEMENT SUR UN CHEMIN DE TRANSPORT.

La présente invention se rapporte à un dispositif d'avance pas-à-pas, pour déplacer une succession d'objets suivant une direction d'avancement sur un chemin de transport.

Il existe de nombreux dispositifs pour déplacer des objets pas-à-pas. En général, ces dispositifs sont conçus pour effectuer des pas constants. Or, il existe des cas où il serait désirable de faire avancer des objets avec des pas inégaux. Il en est ainsi par exemple pour les godets multiples ou les plaques à alvéoles utilisés notamment en cultures horticole et maraîchère pour le semis, le repiquage et d'autres opérations analogues effectuées sur des petites quantités d'un milieu de culture (par exemple du terreau) contenu dans les alvéoles des godets ou plaques. Ces godets et plaques présentent des rangées d'alvéoles dont le pas est constant à l'intérieur du godet multiple ou de la plaque. Par contre, entre deux godets multiples ou plaques déplacés l'un à la suite de l'autre suivant une direction d'avancement, le pas entre la dernière rangée d'alvéoles du premier godet multiple ou plaque et la première rangée d'alvéoles du godet multiple ou plaque suivant est différent et en particulier plus important. Par conséquent, lors de l'avancement d'une succession de tels godets multiples ou plaques par exemple sur une installation de semis, de repiquage, etc., il est nécessaire, pour amener toujours une rangée d'alvéoles en dessous d'une ligne de travail (semis, repiquage, etc.), de faire effectuer aux godets multiples ou plaques un pas différent et notamment un pas plus important lors du passage des dernières alvéoles d'un godet multiple ou plaque aux premières alvéoles d'un godet multiple ou plaque suivant.

Des problèmes analogues se posent dans d'autres domaines, par exemple pour le marquage et d'autres opérations devant être effectuées sur des objets divers.

Or, il n'existe à l'heure actuelle aucun dispositif d'avance pas-à-pas simple et peu coûteux susceptible d'imprimer des pas non uniformes.

La présente invention a pour objet un dispositif d'avance pas-à-pas simple pour déplacer une succession d'objets suivant une direction d'avancement sur un chemin de transport, dispositif qui permette de faire effectuer aux objets des pas non uniformes. L'invention a par ailleurs pour objet un dispositif d'avance pas-à-pas permettant de remédier de manière simple aux problèmes résultant des pas d'avance différents nécessaires lors du transport d'objets tels que des plaques à alvéoles et des godets multiples, au passage d'une plaque ou godet au suivant. L'invention a également pour objet un dispositif d'avance pas-à-pas permettant d'une manière très simple de changer les pas d'avancement imprimés aux objets, notamment pour adapter les pas à des objets différents.

Le dispositif conforme à l'invention comprend un chemin de guidage s'étendant parallèlement au chemin de transport des objets et un chariot mobile sur ledit chemin de guidage et comportant des moyens pour agir par poussée sur l'arrière du dernier des objets afin de déplacer ce dernier et avec lui tous les objets précédents dans la direction d'avancement. Le dispositif comprend, en outre, un moyen moteur effectuant, parallèlement à la direction d'avancement, un mouvement de va-et-vient d'une amplitude constante, supérieure au plus grand pas à faire effectuer auxdits objets. Le dispositif comprend, par ailleurs, un moyen de détermination de pas disposé sur ledit chariot et présentant, parallèlement à la direction d'avancement, une succession de dents en saillie réparties à des intervalles correspondant aux pas à faire effectuer à chaque objet. De plus, le dispositif comprend un moyen d'entraînement unidirectionnel disposé sur le moyen moteur et coopérant, uniquement dans le sens d'avancement, avec les dents successives du dispositif de détermination de pas, à chaque mouvement de va-et-vient du moyen moteur.

Le moyen moteur effectue ainsi toujours un mouvement de va-et-vient de même amplitude, et le chariot fait néanmoins avancer les objets suivant des pas qui peuvent être différents dans la mesure où ils sont définis par les intervalles entre les dents du moyen de détermination de pas.

De préférence, le dispositif conforme à l'invention comprend, en outre, un moyen de recul du chariot pour remettre le chariot en position de départ à la fin d'un cycle comprenant un nombre de pas correspondant au nombre de dents du moyen de détermination de pas.

Suivant un mode de réalisation particulièrement simple, le moyen de détermination de pas est constitué par une crémaillère rapportée de façon échangeable sur le chariot.

Cela permet, par simple changement de la crémaillère, de modifier à volonté le mouvement d'avance pas-à-pas.

Le moyen d'entraînement unidirectionnel peut avantageusement comprendre un cliquet coopérant dans le sens d'avancement avec les dents de la crémaillère pour faire avancer le chariot, mais "sautant" les dents de la crémaillère lors du mouvement de recul.

Pour permettre des pas d'amplitudes très variables, en particulier un pas nettement plus important que les autres au début de chaque nouveau cycle de pas d'avancement (passage d'un objet à l'autre), il est avantageux que le cliquet soit monté sur un chariot roulant sur un chemin de roulement parallèle à la direction d'avancement. Une semelle de soulèvement est montée sur ledit chemin de roulement de manière que ledit chariot se trouve soulevé par ladite semelle pendant une première partie de la phase d'avancement et une dernière partie de la phase de recul de chaque mouvement de va-et-vient du moyen moteur. La crémaillère, comporte, pour les pas d'une amplitude supérieure au double de l'amplitude des pas les plus petits, des dents se trouvant à des intervalles correspondants et présentant une hauteur supérieure à la hauteur des autres dents de manière que le cliquet puisse coopérer avec ces dents plus hautes même lorsque le chariot se trouve sur la semelle et ne puisse coopérer avec les autres dents que lorsqu'il est descendu de la semelle et se trouve donc sur le chemin de roulement.

Ainsi, en faisant effectuer au moyen moteur un mouvement de va-et-vient d'une amplitude nettement supérieure et en particulier plus de deux fois supérieure à celle des pas les plus petits à effectuer et en faisant en sorte que sur une partie notable de ce mouvement de va-et-vient, le chariot portant le cliquet se trouve soulevé par la semelle de manière à ne pouvoir coopérer avec les dents moins hautes que pendant la partie restante du mouvement de va-et-vient, le cliquet peut néanmoins coopérer sur l'ensemble du mouvement de va-et-vient avec les dents plus hautes de la crémaillère et imprimer ainsi au chariot, donc également à l'objet à avancer, des pas nettement plus importants, comme cela est par exemple nécessaire lors du passage d'un godet multiple ou plaque à alvéoles à l'autre.

Pour permettre l'adaptation du dispositif à des pas différents, ladite semelle est réglable en position dans la direction d'avancement.

Le dispositif comprend, par exemple, deux détecteurs de fin de course déterminant l'amplitude du mouvement de va-et-vient du moyen moteur.

Par ailleurs, le dispositif comprend avantageusement un détecteur de fin de course, de préférence réglable, commandant ledit moyen de recul du chariot.

Le moyen moteur ainsi que le moyen de recul du chariot sont de préférence constitués par des vérins pneumatique.

En se référant aux dessins schématiques annexés, on va décrire ci-après plus en détail un mode de réalisation illustratif et non limitatif d'un dispositif conforme à l'invention; sur les dessins :

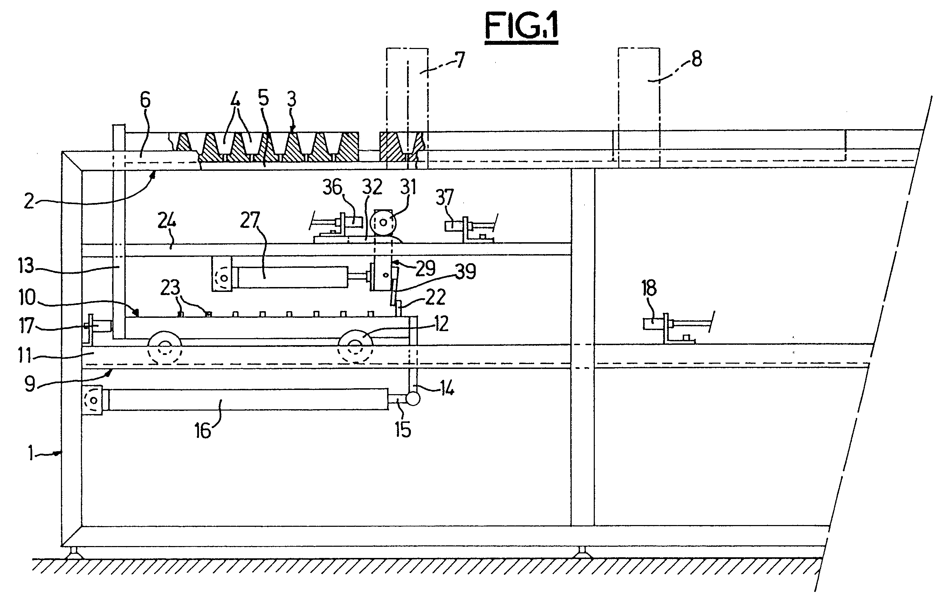

la figure 1 est une vue d'ensemble latérale d'un dispositif conforme à l'invention;

la figure 2 est une coupe partielle à plus grande échelle du dispositif de la figure 1.

Le dispositif d'avance pas-à-pas tel qu'illustré par les dessins comprend, sur un bâti 1 reposant sur le sol, un chemin de transport 2 horizontal pour des objets 3 constitués dans l'exemple représenté par des plaques à alvéoles de forme rectangulaire, présentant huit rangées d'alvéoles 4 dans la direction de transport. Le chemin de transport 2 est défini par deux cornières dont les ailes horizontales 5 supportent les plaques 3 et dont les ailes verticales 6 guident les plaques 3 sur le chemin de transport 2.

Le chemin de transport 2 sert à faire passer les plaques 3 pas-à-pas à plusieurs postes de travail successifs, par exemple un poste 7 de remplissage des alvéoles 4 à l'aide d'un support de culture, par exemple du terreau, et un poste 8 de semis, c'est-à-dire de mise en place d'une graine dans chaque alvéole 4.

En dessous de la partie arrière du chemin de transport 2 est disposé un chemin de guidage 9 pour un chariot 10. Le chemin de guidage 9 qui s'étend horizontalement et parallèlement au chemin de transport 2 est constitué deux cornières 11 sur lesquelles le chariot 10 roule et est guidé par ses roues 12. A son extrémité arrière, le chariot 10 comporte un élément vertical de poussée 13, par exemple sous la forme d'un étrier un U renversé, qui s'étent jusqu'au-dessus du chemin de transport 2 en passant entre les deux cornières 5, 6 constituant le chemin 2.

A son extrémité avant, le chariot 10 comporte une pièce verticale de liaison 14 s'étendant en dessous du chemin de guidage 9 pour la liaison du chariot 10 avec la tige 15 d'un vérin pneumatique 16 disposé en dessous du chemin de guidage 9 et s'étendant horizontalement et parallèlement au chemin de guidage 9. La longueur (course) du vérin 16 est au moins égale à la longueur du chariot 10.

Un détecteur de fin de course 17 est prévu à l'extrémité arrière du chemin de guidage 9 et un autre détecteur de fin de course 18 réglable dans le sens de la longueur du chemin de guidage 9 est prévu en avant du chariot 10.

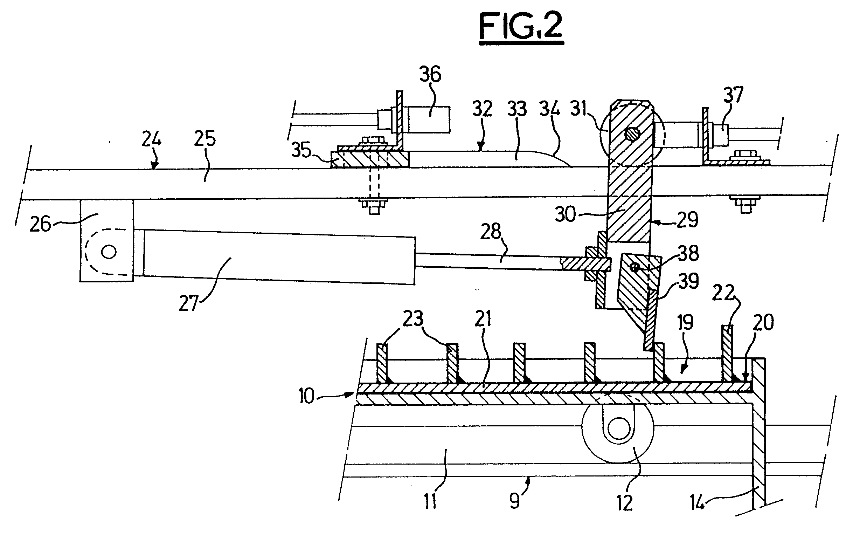

On reconnaît en particulier sur la figure 2 que le chariot 10 comporte, sur le dessus, un logement 19 en forme de rainure longitudinale dans laquelle est rapportée de façon amovible une crémaillère 20 constituée par une barre 21 sur laquelle sont soudées des dents 22, 23 faisant saillie vers le haut. Il y a lieu de remarquer que la première dent 22 dans le sens d'avancement présente une hauteur plus importante que les autres dents 23. Le pas des dents 22, 23 de la crémaillère correspond aux pas des alvéoles 4 des plaques 3 dans la direction de transport. Par ailleurs, il y a lieu de noter que le nombre des dents 23 moins hautes de la crémaillère 20 correspond au nombre d'alvéoles 4 que chaque plaque 3 comporte dans la direction de transport.

Entre le chemin de transport 2 et le chemin de guidage 9, le bâti 1 comporte un support de roulement 24 médian horizontal, parallèle à la direction de transport. Le support 24 qui est constitué de deux barres 25 parallèles, espacées, porte une chape 26 tournée vers le bas, dans laquelle est articulé par un axe horizontal transversal le cylindre d'un vérin pneumatique 27 dont la tige de piston 28 est fixée, à son extrémité libre, à la partie inférieure d'un chariot 29. Le châssis 30 du chariot 29 s'étend vers le haut entre les deux barres 25 espacées du support de roulement 24 et porte ici un essieu à deux roues 31 roulant sur les deux barres 25.

Sur le dessus des deux barres 25 est fixée une semelle 32 ayant en plan la forme d'un U dont les deux ailes sont tournées dans la direction de transport. Les deux ailes 33 de la semelle 32 sont biseautées ou arrondies à leur extrémité libre de manière à constituer ici des rampes 34 de montée et de descente pour les roues 32 du chariot 29 dont le châssis 30 peut pénétrer entre les deux ailes 33 lors du mouvement du chariot 29 en opposition au sens d'avancement.

Sur l'âme 35 de la semelle 32 est fixé un détecteur de fin de course 36 réglable dans la direction de transport, tout comme la semelle 32.

A distance en avant des rampes 34 de la semelle 32, à distance des rampes 34, est disposé un autre détecteur de fin de course 37.

A sa partie inférieure, le châssis 30 du chariot 29 présente la forme d'une chape dans laquelle une palette 39 est articulée par un axe 38 horizontal, perpendiculaire à la direction de transport.

Cette palette 39 présente une longueur telle vers le bas que lorsque les roues 31 du chariot 29 se trouvent sur la semelle 32, elle puisse coopérer uniquement avec la dent 22 plus haute de la crémaillère 20. Par contre, lorsque les roues 31 du chariot 29 se trouvent en avant de la semelle 32, c'est-à-dire sur les barres 25 du support de roulement 24, la palette 39 peut coopérer également avec les dents 23 moins hautes de la crémaillère 20.

On va expliquer ci-après le mode de fonctionnement du dispositif tel que décrit ci-dessus.

Tout d'abord, on choisi et on introduit dans le chariot 10 une crémaillère 20 correspondant aux plaques 3 à alvéoles à transporter. Cette crémaillère 20 présente autant de dents 23 basses que chaque plaque 3 comporte d'alvéoles 4, le pas des dents 22, 23 étent égal au pas des alvéoles 4.

On amène ensuite le chariot 10, à l'aide du vérin 16, en position de recul complet, déterminée par le détecteur de fin de course 17. On amène également le chariot 29 à l'aide du vérin 27 en position de recul complète déterminée par le détecteur de fin de course 36.

On règle la position du détecteur de fin de course 18 en fonction de la longueur de chaque plaque 3 de manière que le chariot 10 puisse effectuer, entre les deux détecteurs 17 et 18, une course qui dépasse quelque peu la longueur d'une plaque 3. On règle également le détecteur de fin de course 36 par rapport au détecteur 37 de manière que le chariot 29 puisse effectuer une course supérieure au pas et de préférence supérieure à deux fois le pas des alvéoles 4 de la plaque 3. Enfin, on règle la semelle 32 par rapport au détecteur de fin de course 37 de manière que la course effectuée par le chariot 29 en position basse, c'està-dire les roues 31 étant en contact avec le support de roulement 24, soit supérieure au pas, mais inférieure à deux fois le pas des alvéoles 4 de la plaque 3.

L'ensemble du dispositif étant ainsi en position de recul complet, on place une première plaque 3 sur le chemin de transport 2, en avant de l'organe de poussée 13 du chariot 10 et on met en route le dispositif. Sous l'effet d'une commande cyclique non représentée, le vérin 27 fait avancer le chariot 29, dont le cliquet 39 coopérant avec la dent 22 haute de la crémaillère 20 entraîne en conséquence le chariot 10, donc la plaque 3 jusqu'à ce que le chariot 29 entre en contact avec le détecteur 37. Dans cette position, la première rangée d'alvéoles 4 de la plaque 3 avancée par l'organe 13 se trouve au premier poste de traitement 7 lequel opère alors, par exemple, le remplissage des alvéoles de la première rangée à l'aide de terreau, sous l'action de la commande cyclique.

Le mouvement du vérin 27 est alors inversé de sorte que le vérin 27 fait reculer le chariot 29, le cliquet 39 "sautant" la première dent 23 avant de monter sur la semelle 32 et de revenir en arrière jusqu'au contact du détecteur de fin de course 36. Ce détecteur 36 inverse de nouveau le mouvement du vérin 27 pour faire avancer le chariot 29 dont le cliquet 39. lorsque les roues 31 du chariot 29 sont descendues de la semelle 32, entre en contact avec la première dent 23 et fait alors avancer le chariot 10 et avec lui la plaque 3 d'un pas pour amener la seconde rangée d'alvéoles 3 au premier poste de traitement 7, et ainsi de suite.

Pendant tous ces mouvement de va-et-vient du chariot 29 sous l'action du vérin 27, le vérin de recul 16 est à l'air libre et son piston suit, sans le contrarier, le mouvement d'avancement du chariot 10.

Lorsque la dernière rangée d'alvéoles 4 arrive au poste de traitement 7, l'extrémité avant du chariot 10 entre en contact avec le détecteur 18 qui agit sur la commande pour arrêter le mouvement cyclique du vérin 29 et déclencher le mouvement de recul du vérin 16, pour ramener le chariot 10 à la position de recul représentée.

On met ensuite en place sur le chemin de transport 2 une nouvelle plaque 3 entre l'extrémité arrière de la plaque 3 précédente et l'organe de poussée 13 et on recommence le cycle d'avance pas à pas tel que décrit. La plaque 3 précédente passe ainsi pas-à-pas au deuxième poste de traitement 8, par exemple un poste de semis.

Il y a lieu de remarquer qu'à la fin du dernier pas d'avancement d'un cycle, la plaque 3 poussée par l'organe de poussée 13 se trouve à une position telle que lorsque cet organe 13 est ensuite ramené en position de recul complet, il existe, entre le bord arrière de cette plaque et l'organe de poussée 13, un intervalle supérieur à la longueur de la plaque, permettant la mise en place sans problèmes, sur le chemin de transport 2, d'une nouvelle plaque, par exemple à la main ou par un dispositif de dépilage automatique non représenté.

Quelle que soit la position de cette nouvelle plaque par rapport à la plaque précédente, c'està-dire quel que soit le jeu entre ces deux plaques, la nouvelle plaque est toujours amenée, par le premier pas du chariot 10, à la même position définie par la position de la dent 22 et la position du détecteur de fin de course 37, et amène à son tour la plaque précédente toujours à la même position.

L'amplitude de ce premier pas du chariot 10 qui assure donc l'indexage de la dernière plaque (et des plaques précédentes qui sont avancées par cette dernière) peut être choisie à volonté, grâce à la présence de la semelle 32 qui rend ce premier pas indépendant des pas suivants déterminés par le pas des dents 22, 23.

Bien entendu, le dispositif conforme à l'invention peut également être utilisé pour l'avance pas-à-pas d'objets autres que des plaques à alvéoles 3 et de godets multiples utilisés en culture horticole et maraîchère, par exemple pour le marquage d'objets tels que des paquets ou colis.

**Revendications**

1. Dispositif d'avance pas-à-pas, notamment pour déplacer une succession d'objets suivant une direction d'avancement sur un chemin de transport, caractérisé par le fait qu'il comprend :

un chemin de guidage (9) s'étendant parallèlement au chemin de transport (2) des objets (3);

un chariot (10) mobile sur ledit chemin de guidage et portant des moyens (13) pour agir par poussée sur l'arrière du dernier des objets (3) afin de déplacer ce dernier et avec lui tous les objets précédents dans la direction d'avancement;

un moyen moteur (27) effectuant, parallèlement à la direction d'avancement, un mouvement de va-et-vient d'une amplitude constante, supérieure au plus grande pas à faire effectuer auxdits objets;

un moyen de détermination de pas (20) disposé sur ledit chariot (10) et présentant, parallèlement à la direction d'avancement, une succession de dents en saillie (22, 23) réparties à des intervalles correspondant aux pas à faire effectuer à chaque objet (3); et

un moyen d'entraînement unidirectionnel (39) disposé sur le moyen moteur et coopérant, uniquement dans le sens d'avancement, avec les dents successives (22, 23) du dispositif de détermination de pas, à chaque mouvement de va-et-vient du moyen moteur.

2. Dispositif suivant la revendication 1, caractérisé par le fait qu'il comprend, en outre, un moyen de recul (16) de chariot, pour remettre le chariot (10) en position de départ à la fin d'un cycle comprenant un nombre de pas correspondant au nombre de dents du moyen de détermination de pas.

3. Dispositif suivant la revendication 1 ou 2, caractérisé par le fait que le moyen de détermination de pas est constitué par une crémaillère (20) rapportée de façon échangeable sur le chariot (10).

4. Dispositif suivant l'une quelconque des revendications précédentes, caractérisé par le fait que le moyen d'entraînement unidirectionnel comprend un cliquet (39) coopérant avec les dents de la crémaillère dans le sens d'avancement du moyen moteur.

5. Dispositif suivant la revendication 4, caractérisé par le fait que le cliquet (39) est monté sur un chariot (29) roulant sur un chemin de roulement (24) parallèle à la directement d'avancement, qu'une semelle de soulèvement (32) est montée sur ledit chemin de roulement de manière que ledit chariot (29) se trouve soulevé par ladite semelle pendant une première partie de la phase d'avancement et pendant une dernière partie de la phase de recul de chaque mouvement de va-et-vient du moyen moteur, et que la crémaillère (20) comporte, pour les pas d'une amplitude supérieure au double de l'amplitude du pas le plus petit, des dents (22) se trouvant à des intervalles correspondants et présentant une hauteur supérieure à la hauteur des autres dents (23) de manière que le cliquet puisse coopérer avec ces dents (22) plus hautes même lorsque le chariot se trouve sur la semelle et ne puisse coopérer avec les autres dents (23) que lorsqu'il est descendu de la semelle.

6. Dispositif suivant la revendication 5, caractérisé par le fait que ladite semelle (32) est réglable en position dans la direction d'avancement.

7. Dispositif suivant l'une quelconque des revendications précédentes, caractérisé par le fait qu'il comprend deux détecteurs de fin de course (36, 37) déterminant l'amplitude du mouvement de va-et-vient du moyen moteur.

8. Dispositif suivant l'une quelconque des revendications précédentes, caractérisé par le fait qu'il comprend un détecteur de fin de course (18) commandant ledit moyen de recul de chariot.

9. Dispositif suivant l'une quelconque des revendications 2 à 8, caractérisé par le fait que le moyen moteur et le moyen de recul de chariot sont constitués par des vérins pneumatiques (27, 16).

FIG.1

# FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 811 548 (NEFF)<br>* En entier * <br>----- | 1 | B 65 G 25/10<br>A 01 G 9/08 |

DOMAINES TECHNIQUES
RECHERCHES (Int. Cl.4)

B 65 G
A 01 G

Le présent rapport a été établi pour toutes les revendications

| Lieu de la recherche | Date d'achèvement de la recherche | Examinateur |
|---|---|---|
| LA HAYE | 06-10-1988 | OSTYN T.J.M. |